# EUROPÄISCHE PATENTANMELDUNG

(11) **EP 4 775 348 A2**
(43) Veröffentlichungstag der Anmeldung: **15.07.2026**
(21) Anmeldenummer: 25225990.8
(22) Anmeldetag: 19.12.2025
(51) Int. Cl.: B23Q 1/00, B23B 37/00, B24B 1/04, B23Q 3/12

(54) **SPINDELSYSTEM MIT IM EINSPANNABSCHNITT DES WERKZEUGHALTERS INTEGRIERTEM INDUKTIONSELEMENT**

(30) Priorität: 20.12.2024 DE 102024139422
(71) Anmelder: DMG MORI Ultrasonic Lasertec GmbH, 55758 Stipshausen (DE)
(72) Erfinder: SCHWENK, Gaston, 55469 Simmern (DE); DOLINGER, Viktor, 54470 Bernkastel-Kues (DE); GÖBEL, Phillip, 55566 Bad Sobernheim (DE); FRANZMANN, Fabian, 55758 Veitsrodt (DE); KETELAER, Jens, 65207 Wiesbaden (DE)
(74) Vertreter: MERH-IP Matias Erny Reichl Hoffmann Patentanwälte PartG mbB

(57) **Zusammenfassung**

Ein Spindelsystem 100 umfasst eine Spindelvorrichtung 500 mit einem Gehäuse 102 und einer Arbeitsspindel an die lösbar ein Werkzeughalter 400 verbunden werden kann und einen Werkzeughalter 400, mit einem Einspannabschnitt 401, einem Greiferabschnitt 403, einem Werkzeugaufnahmeabschnitt 404 und einem mit diesem gekoppelten Schwingungswandler 405 und eine Energieübertragungsvorrichtung 103, die ein erstes Induktionselement 104a und ein zweites Induktionselement 104b umfasst, die einander radial gegenüberliegen, wenn der Werkzeughalter 400 mit der Arbeitsspindel verbunden ist, wobei das zweite Induktionselement 104b integral mit dem Einspannabschnitt des Werkzeughalters 401 ausgebildet ist, dergestalt, dass eine automatisierte Wechselvorrichtung in den Greiferabschnitt des Werkzeughalters 403 eingreifen kann.

## Beschreibung

### Technisches Gebiet

Die vorliegende Erfindung betrifft ein Spindelsystem, insbesondere zur Ultraschallbearbeitung von Werkstücken, mit einem Werkzeug, das mittels eines auswechselbaren Werkzeughalters mit einer rotatorisch angetriebenen Arbeitsspindel verbunden ist, wobei Energie kontaktlos an den Werkzeughalter übertragen wird.

### Hintergrund der Erfindung

Aus dem Stand der Technik sind bereits Spindelsysteme bekannt, die für die Ultraschallbearbeitung eines Werkstücks mit einem rotierenden Werkzeug eingerichtet sind. Üblicherweise sind derartige Systeme mit einem Schwingungswandler ausgestattet, der mit einer Werkzeugaufnahme des Werkzeughalters verbunden ist um Schwingungen an ein im Werkzeughalter aufgenommenes Werkzeug zu übertragen.

Hierzu kommen beispielsweise Schwingungswandler zum Einsatz, die auf Piezoelementen basieren, welche als Aktor für das Erzeugen von Schwingungen eingesetzt werden. Diese Piezoelemente sind regelmäßig aus Piezo-Keramiken gefertigt und werden üblicherweise als Stapel eingesetzt. Um eine Schwingung zu erzeugen, wird an einen solchen Stapel eine elektrische Spannung angelegt. Dadurch verformt sich der Stapel der Piezoelemente aufgrund des inversen piezoelektrischen Effekts.

Da für eine effektive Schwingungsübertragung an das Werkzeug bestimmte geometrische Zusammenhänge zwischen der Position des Schwingungswandlers und der Position des Werkzeughalters beachtet werden müssen, ist der Schwingungswandler oft direkt im Werkzeughalter verbaut.

Bei dieser Konfiguration stellt sich das Problem eine elektrische Verbindung zwischen der rotierenden Spindel mit dem verbundenen Werkzeughalter und dem darin verbauten Schwingungswandler und dem umliegenden statischen Gehäuse der Spindel, beziehungsweise dem Gehäuse der Maschine herzustellen.

Diesbezüglich offenbart beispielsweise die Patentschrift EP 3 616 830 A1 einen Aufbau, bei dem elektrische Energie induktiv von einer Spule im Spindelgehäuse an eine Spule, welche mit dem Spindelschaft verbunden ist und folglich gemeinsam mit diesem rotiert, übertragen wird. Die elektrische Energie der rotierenden Spule am Spindelschaft wird durch gefederte Stifte eines Werkzeughalters, die beim Verbinden des Werkzeughalters mit der Spindel eine entsprechende Verbindungsfläche kontaktieren, an den Schwingungswandler im Werkzeughalter übertragen.

Diese Vorgehensweise hat jedoch einige Nachteile. Um eine elektrische Leitfähigkeit sicherstellen zu können müssen die gefederten Stifte am Werkzeughalter und die Kontaktflächen am Spindelschaft stets sauber gehalten werden. Die Kontaktflächen und die gefederten Stifte befinden sich jedoch direkt im Verbindungsbereich des Werkzeughalters mit dem Spindelschaft und kommen dadurch beispielsweise direkt in Kontakt mit Schmiermitteln. Weiterhin liegt dieser Verbindungsbereich auch in direkter Nähe zum Bearbeitungsbereich, der unter anderem durch Kühlmitteleinsatz besonders stark verschmutzt wird. Die Position der elektrischen Verbindung ist folglich nur mit erheblichem Zusatzaufwand sauber zu halten. Im schlechtesten Fall, wird eine Verschmutzung sogar erst während der Werkstückbearbeitung dadurch erkannt, dass eine Oberflächenbearbeitung nicht wie geplant erfolgt.

Eine weitere aus dem Stand der Technik bekannte Alternative versucht diese Probleme zu lösen, indem die Spule am Werkzeughalter direkt angebracht wird. Üblicherweise sitzt die Spule oberhalb des Bereichs, in dem das Werkzeug in den Werkzeughalter aufgenommen wird. Auch in diesem Fall wird die elektrische Verbindung mittels einer zweiten Spule hergestellt, welche induktiv mit der Spule des Werkzeughalters gekoppelt wird. Um trotz der Position der Spule am Werkzeughalter über dem Aufnahmebereich des Werkzeugs einen Wechsel des Werkzeughalters zu ermöglichen, ist bei dieser Ausführungsform die Geometrie der statischen Spule begrenzt. Es kann in diesem Fall insbesondere keine Spule genutzt werden, die der rotierenden Spule des Werkzeughalters auf dem gesamten Umfang radial gegenüberliegt.

Stattdessen wird eine statische Spule eingesetzt, die lediglich auf einem Teil des Umfangs, beispielsweise auf einer Hälfte oder einem Drittel, radial gegenüber der rotierenden Spule des Werkzeughalters positioniert ist. Auf diese Weise ist es ungeachtet der Position der rotierenden Spule am Werkzeughalter oberhalb des Werkzeugaufnahmebereichs möglich den Werkzeughalter automatisiert von der Spindel zu trennen. Die Begrenzung der Erstreckung der statischen Spule auf einen Teilbereich des Umfangs führt jedoch zu einer deutlich reduzierten Übertragungseffizienz der elektrischen Energie an die rotierende Spule des Werkzeughalters.

Zusammengefasst weisen die aus dem Stand der Technik bekannten Lösungen für das Übertragen elektrischer Energie von einer statischen Maschinenseite auf einen rotierenden Werkzeughalter also Probleme mit der Wartungseffizienz, Verbindungszuverlässigkeit sowie der Verbindungseffizienz auf.

### Zusammenfassung

Eine Aufgabe der vorliegenden Erfindung ist es, ein Spindelsystem bereitzustellen, das die oben genannten Probleme vermeidet.

Eine weitere Aufgabe der vorliegenden Erfindung ist es einen Werkzeughalter mit einer Einspannung bereitzustellen, die mechanisch höchst belastbar ist, wobei der Werkzeughalter gleichzeitig eine effizientere und zuverlässigere kontaktlose Übertragung elektrischer Energie von einer statischen Umgebung einer Spindel, mit der der Werkzeughalter verbunden ist, auf den rotierenden Werkzeughalter erlaubt, als die bisher aus dem Stand der Technik bekannten Lösungen.

Eine weitere Aufgabe der vorliegenden Erfindung liegt in der Bereitstellung einer Werkzeugmaschine, insbesondere zur zerspanenden Bearbeitung eines Werkstücks unter Einsatz von Schwingungen im Ultraschallbereich, wobei die zur Erzeugung der Ultraschallschwingungen benötigte elektrische Energie kontaktlos, effizienter und zuverlässiger von einem statischen Teil der Maschine auf den rotierenden Werkzeughalter übertragen wird, als bei Lösungen, wie sie aus dem Stand der Technik bekannt sind. Weiterhin soll der mit der Arbeitsspindel der Werkzeugmaschine verbundene Werkzeughalter mittels einer automatisierten Wechselvorrichtung ausgetauscht werden können.

Zur Lösung dieser Aufgaben wird ein Spindelsystem nach Anspruch 1, ein Werkzeughalter nach Anspruch 5, eine Spindelvorrichtung nach Anspruch 13, sowie eine Werkzeugmaschine nach Anspruch 14 bereitgestellt.

Die jeweiligen abhängigen Ansprüche beziehen sich auf bevorzugte Ausführungsformen, die jeweils für sich oder in Kombination bereitgestellt werden können.

Gemäß einem ersten Aspekt der Erfindung wird ein Spindelsystem zum Einsatz an einer Werkzeugmaschine bereitgestellt, das wenigstens eine Spindelvorrichtung, einen Werkzeughalter und eine Energieübertragungsvorrichtung umfasst.

Die Spindelvorrichtung umfasst ihrerseits wiederum eine rotatorisch angetriebene Arbeitsspindel mit einem Aufnahmeabschnitt zur lösbaren Verbindung eines Werkzeughalters und ein Spindelgehäuse, in dem die Arbeitsspindel gelagert ist.

Als lösbare Verbindungen sind Verbindungen zu verstehen, die sich zerstörungsfrei wieder lösen lassen. Insbesondere sind Verschrauben, Verklemmen, Einspannen oder Verbinden mittels einer Sicherheitsverbindung, wie einem Bajonettverschluss, als lösbare Verbindungen zu verstehen.

Weiterhin umfasst der Werkzeughalter seinerseits wenigstens einen Einspannabschnitt zur lösbaren Verbindung mit einer Arbeitsspindel einer Spindelvorrichtung, einen Greiferabschnitt, der relativ zu einem Einspannende des Werkzeughalters unterhalb des Einspannabschnittes angeordnet ist, einen Werkzeugaufnahmeabschnitt und einen mit diesem Werkzeugaufnahmeabschnitt gekoppelten Schwingungswandler, der eingerichtet ist, ein im Werkzeugaufnahmeabschnitt aufgenommenes Bearbeitungswerkzeug in Schwingung zu versetzen.

Als Einspannende des Werkzeughalters ist das axiale Ende des Werkzeughalters zu verstehen, an dem der Werkzeughalter mit einer Arbeitsspindel verbunden wird, während das gegenüberliegende axiale Ende als das werkzeugseitige Ende bezeichnet wird. Insbesondere befindet sich der Einspannabschnitt am Einspannende des Werkzeughalters und der Werkzeughalter ist eingerichtet, nur mittels dieses Einspannabschnittes mit einer Arbeitsspindel verbunden zu werden, sodass das Einspannende eine eindeutige axiale Seite des Werkzeughalters bezeichnet. Eine Anordnung relativ zum Einspannende unterhalb des Einspannabschnittes ist folglich so zu verstehen, dass an dem Werkzeughalter in axialer Richtung vom Einspannende zum werkzeugseitigen Ende zuerst der Einspannabschnitt und nachfolgend der Greiferabschnitt angeordnet ist. Wenn der Werkzeughalter also mit einer Arbeitsspindel verbunden ist, liegt der Greiferabschnitt bei Vertikaler Ausrichtung des Werkzeughalters mit dem werkzeugseitigen Ende nach unten ausgerichtet also unter dem Einspannabschnitt.

Weiterhin umfasst die Energieübertragungsvorrichtung ein erstes Induktionselement und ein zweites Induktionselement. Die Energieübertragungsvorrichtung ist außerdem eingerichtet, bei mit der Arbeitsspindel verbundenem Werkzeughalter zur Energieversorgung des Schwingungswandlers kontaktlos Energie zwischen dem ersten Induktionselement und dem diesen radial gegenüberliegenden zweiten Induktionselement zu übertragen. Insbesondere kann es sich bei diesen Elementen jeweils um Spulen handeln, die eingerichtet sind induktiv gekoppelt zu werden um so eine kontaktlose Übertragung elektrischer Energie zu ermöglichen. Besonders vorteilhaft sind die beiden Induktionselemente derart angeordnet, dass sie bei mit der Arbeitsspindel verbundenem Werkzeughalter einander radial gegenüberliegen.

Das erste Induktionselement ist dabei am Spindelgehäuse angeordnet. Dieses Induktionselement kann dabei vorteilhaft als statisches Induktionselement ausgebildet sein, das heißt es befindet sich relativ zur rotatorisch angetriebenen Arbeitsspindel in einer festen Position. Vorteilhaft ist dieses erste Induktionselement derart ringförmig am Spindelgehäuse angeordnet, dass die Achse der Arbeitsspindel mittig durch das Induktionselement verläuft. Besonders vorteilhaft ist das erste Induktionselement im Spindelgehäuse integriert und derart angeordnet, dass eine Außenkontur des Induktionselements vollständig innerhalb einer Außenkontur des Spindelgehäuses liegt.

Das zweite Induktionselement ist am Werkzeughalter im Einspannabschnitt angeordnet. Vorteilhaft ist das zweite Induktionselement derart ringförmig am Einspannabschnitt des Werkzeughalters angeordnet, dass eine Mittelachse des Werkzeughalters mittig durch das Induktionselement verläuft. Insbesondere verläuft, wenn der Werkzeughalter mit einer Arbeitsspindel verbunden ist die Achse der Arbeitsspindel mittig durch das zweite Induktionselement.

Besonders vorteilhaft sind also das erste und das zweite Induktionselement derart ringförmig angeordnet, dass bei mit einer Arbeitsspindel verbundenem Werkzeughalter eine Rotationsachse der rotatorisch angetriebenen Arbeitsspindel mittig durch beide Induktionselemente verläuft.

Weiterhin sind die Induktionselemente zusätzlich so ausgerichtet, dass sie bei mit einer Arbeitsspindel verbundenem Werkzeughalter einander radial gegenüberliegen. Das heißt insbesondere, dass das erste Induktionselement und das zweite Induktionselement derart angeordnet sind, dass sie sich senkrecht zu einer Rotationsachse der rotatorisch angetriebenen Arbeitsspindel erstrecken. Dabei ist es besonders vorteilhaft, wenn das erste und das zweite Induktionselement konzentrisch ausgerichtet sind. Bei dieser Ausrichtung haben beide ringförmig angeordneten Induktionselemente auf dem gesamten Umfang jeweils den gleichen Abstand zueinander, was eine hohe Übertragungseffizienz garantiert.

Eine induktive Kopplung von bei mit einer Arbeitsspindel verbundenem Werkzeughalter einander radial gegenüberliegenden Induktionselementen hat gegenüber axial zueinander ausgerichteten Induktionselementen eine verbesserte Übertragungszuverlässigkeit, falls es zu fehlerhaften Ausrichtungen des mit einer Arbeitsspindel verbundenen Werkzeughalters kommt. Insbesondere sind hierbei Fehlausrichtungen zu betrachten, bei der der Werkzeughalter nicht korrekt eingespannt wird und infolgedessen zu tief an der Arbeitsspindel verbunden ist. Der Werkzeughalter ist also beispielsweise derart fehlerhaft mit der Arbeitsspindel verbunden, dass der Aufnahmeabschnitt der Arbeitsspindel nicht komplett in den Einspannabschnitt des Werkzeughalters eingreift. Bei einer Betrachtung mit nach unten ausgerichtetem Werkzeughalter entlang der Rotationsachse der Arbeitsspindel, sitzt der Werkzeughalter folglich zu tief auf der Arbeitsspindel.

Im Fall einer axialen Ausrichtung der Induktionselemente führt eine derartige Fehlausrichtung dazu, dass sich der Abstand zwischen Induktionselementen vergrößert, was die Übertragungseffizienz stark negativ beeinflusst.

Sind die Induktionselemente dagegen radial zueinander ausgerichtet, ist der Abstand der Induktionselemente zueinander im Wesentlichen durch die Anordnung der Induktionselemente am Werkzeughalter und am Spindelgehäuse vorbestimmt. Eine Fehlausrichtung des Werkzeughalters entlang der Rotationsachse führt diesfalls hauptsächlich dazu, dass das Induktionselement des Werkzeughalters etwas zu tief sitzt, was für die Übertragungseffizienz aber weitaus geringere Auswirkungen als eine Veränderung des Abstands der Induktionselement zueinander hat.

Gemäß dem ersten Aspekt der Erfindung ist das zweite Induktionselement derart integral mit dem Einspannabschnitt des Werkzeughalters ausgebildet, dass eine automatisierte Wechselvorrichtung in den Greiferabschnitt des Werkzeughalters eingreifen kann.

Diese integrale Ausbildung mit dem Einspannabschnitt des Werkzeughalters ist aus mehreren Gründen vorteilhaft gegenüber aus dem Stand der Technik bekannten Lösungen.

Erstens können bereits vorhandene Automatisierungsvorrichtungen weiter genutzt werden, da sie wie üblich in den Greiferabschnitt des Werkzeughalters eingreifen können. Der Greiferabschnitt wird also nicht dadurch beeinträchtigt, dass der Werkzeughalter weitere Funktionalität, namentlich ein Induktionselement zur Energieversorgung eines Schwingungswandlers, umfasst. Die Eignung des Werkzeughalters für die Ultraschallbearbeitung durch das umfasste Induktionselement und den umfassten Schwingungswandler ist sozusagen transparent für Automatisierungsvorrichtungen, welche auf einem Eingriff in den Greiferabschnitt des Werkzeughalters basieren. Dadurch wird die Einsatzflexibilität und in direkter Folge die Wirtschaftlichkeit der entsprechenden Vorrichtungen gesteigert, da die Automatisierungsvorrichtung unabhängig von einer etwaigen Ultraschallbearbeitung vorgesehen werden kann.

Zweitens erlaubt die integrale Ausbildung des zweiten Induktionselements mit dem Einspannabschnitt des Werkzeughalters eine besonders günstige Positionierung des ersten Induktionselements, welches kontaktlos elektrische Energie an das zweite Induktionselement überträgt. Das erste Induktionselement kann im Spindelgehäuse nah an dem Bereich positioniert werden in dem der Werkzeughalter mit der Arbeitsspindel verbunden wird, ohne sich jedoch in den Bearbeitungsbereich zu erstrecken. Es werden also ungünstige Störkonturen im Bearbeitungsbereich vermieden, die einerseits direkt die Bearbeitungsflexibilität verringern und andererseits auch zu Problemen mit zusätzlichen Automatisierungsvorrichtungen führen können.

Besonders vorteilhaft kann das ersten Induktionselement auch als Spule ausgeführt werden, die den Bereich, in dem der Werkzeughalter mit der Arbeitsspindel verbunden wird und in dem bei mit einer Arbeitsspindel verbundenem Werkzeughalter das zweite Induktionselement angeordnet ist, komplett, das heißt auf 360° umschließt. Dies steigert in besonders vorteilhafter Weise die Übertragungseffizienz von elektrischer Energie auf das zweite Induktionselement gegenüber Lösungen aus dem Stand der Technik, die ein erstes Induktionselement lediglich auf einem Teilabschnitt des Umfangs eines zweiten Induktionselements angeordnet haben.

In einer besonders vorteilhaften Ausführungsform ist der Einspannabschnitt des Werkzeughalters als Hohlschaftkegel ausgebildet. Insbesondere kann der Einspannabschnitt als genormter Hohlschaftkegel (HSK) ausgebildet sein. Besonders vorteilhaft, ist das zweite Induktionselement integral mit dem genormten Hohlschaftkegel ausgebildet, insbesondere derart, dass der Einspannabschnitt mit integral ausgebildetem Induktionselement alle Normvoraussetzungen für den HSK erfüllt.

Diese Ausführungsform ist besonders vorteilhaft, da der HSK normgemäß mit einer Plananlagefläche ausgeführt ist, die bei nach unten ausgerichtetem Werkzeug oberhalb des Greiferabschnitts angeordnet ist. Bei mit einer Spindelachse verbundenem Werkzeughalter, beträgt ein Anteil der gesamten Spannkraft bei Plananlagefläche mehr als 80%, womit diese maßgeblich für Grenzbelastung und Steifigkeit der Verbindung der Spindelachse mit dem Werkzeughalter verantwortlich ist. Da diese Plananlagefläche nicht durch Kontaktstifte oder dergleichen durchbrochen ist, bzw. da die Plananlagefläche aufgrund der integralen Ausbildung des Induktionselements mit dem Einspannabschnitt entsprechend der HSK-Norm ausgebildet sein kann, ist eine höhere Grenzbelastung und Steifigkeit der Verbindung von Werkzeughalter und Spindelachse möglich. Es sind also bei dieser Ausführungsform Bearbeitungen möglich, die größere Kräfte erfordern als bei Lösungen, bei denen beispielsweise Kontaktstifte oder dergleichen durch die Plananlagefläche verlaufen.

In einer weiteren vorteilhaften Ausführungsform ist der Einspannabschnitt des Werkzeughalters als Steilkegel ausgebildet. Diese Ausführungsform erlaubt einen einfachen Werkzeugwechsel, beziehungsweise Wechsel des Werkzeughalters, was besonders bei einem hohen Automatisierungsgrad der Werkstückbearbeitung bei Nutzung vieler verschiedener Werkzeuge vorteilhaft ist. Weiterhin erlaubt der Steilkegel einen geringen Abstand zwischen der Schneide eines im Werkzeughalter aufgenommenen Werkzeugs und einem Spindellager der Arbeitsspindel, mit der der Werkzeughalter verbunden ist, auf, wodurch eine hohe Biegesteifigkeit erreicht wird.

In einer weiteren besonders vorteilhaften Ausführungsform umfasst der Werkzeughalter zusätzlich zum Zwecke der Übertragung elektrischer Energie vom Induktionselement des Werkzeughalters an den Schwingungswandler Leitungen, die lötfrei mit dem Schwingungswandler verbunden sind.

Diese Ausführungsform ist besonders vorteilhaft, wenn ein Schwingungswandler eingesetzt wird, der auf einem Stapel an Piezoelementen basiert. Für diese Piezostapel ist es üblich, die Elektroden für die Anregung der Piezoelemente mit einem lötbaren Werkstoff zu verlöten. Aufgrund der meist sehr kompakten Ausführungsformen von Piezostapeln werden diese Kontaktierungen direkt am Piezostapel vorgenommen, sodass an den Längsseiten eines Piezostapels teilweise sehr ausgeprägte Lötstellen vorhanden sind. Diese ausgeprägten Lötstellen reduzieren einerseits das Miniaturisierungspotenzial, da entsprechender Platz im Werkzeughalter vorgesehen werden muss, andererseits handelt es sich bei dem Verlöten um einen manuellen Prozess, was die Fertigungseffizienz erheblich senkt.

Durch die lötfreie Verbindung wird also unter anderem der Platzbedarf des Schwingungswandlers reduziert, was auch die minimal erforderliche Größe des Werkzeughalters reduziert. Dies führt in Kombination mit der integralen Fertigung von Einspannabschnitt und zweitem Induktionselement zu einem Werkzeughalter, der für die Ultraschallbearbeitung eingerichtet ist, ohne zwangsläufig in geänderten Abmessungen des Werkzeughalters zu resultieren. Somit müssen keine zusätzlichen Anpassungen an eventuellen Automatisierungsvorrichtungen, wie Werkzeugwechslern oder -Magazinen vorgenommen werden.

Weiterhin ist auch die Fertigungseffizienz der Werkzeughalter dieser vorteilhaften Ausführung erheblich gesteigert, da der Fertigungsschritt des manuellen Verlötens entfällt.

Gemäß einem zweiten Aspekt der Erfindung wird ein Werkzeughalter für ein Spindelsystem bereitgestellt, wobei der Werkzeughalter einen Einspannabschnitt zur lösbaren Verbindung mit einer Arbeitsspindel einer Spindelvorrichtung, einen relativ zu einem Einspannende des Werkzeughalters unterhalb des Einspannabschnittes angeordneten Greiferabschnitt, einen Werkzeugaufnahmeabschnitt, und einen mit dem Werkzeugaufnahmeabschnitt gekoppelten Schwingungswandler, der eingerichtet ist, ein im Werkzeugaufnahmeabschnitt aufgenommenes Bearbeitungswerkzeug in Schwingung zu versetzen, umfasst. Der Werkzeughalter hat dabei im Einspannabschnitt ein Induktionselement angeordnet, das bei einer Verbindung des Werkzeughalters mit einer Arbeitsspindel eingerichtet ist, kontaktlos elektrische Energie zu empfangen und an den Schwingungswandler weiterzuleiten. Dieses Induktionselement ist derart integral mit dem Einspannabschnitt des Werkzeughalter ausgebildet, dass eine automatisierte Wechselvorrichtung in den Greiferabschnitt des Werkzeughalters eingreifen kann.

Dadurch, dass das Induktionselement integral mit dem Werkzeughalter gefertigt ist, kann dieser bei Bedarf zur Ultraschallbearbeitung eines Werkstücks eingesetzt werden. Das integral mit dem Einspannabschnitt ausgebildete Induktionselement kann dann kontaktlos elektrische Energie von einem anderen Induktionselement empfangen und an den Schwingungswandler weiterleiten, der mit dem Werkzeugaufnahmeabschnitt gekoppelt ist. Dadurch kann der Schwingungswandler den Werkzeugaufnahmeabschnitt und in direkter Folge ein in diesen aufgenommenes Werkzeug in Schwingung versetzen.

Wird hingegen keine Ultraschallbearbeitung benötigt, oder unterstützt eine Maschine, beispielsweise mangels eines Induktionselements zur Übertragung von elektrischer Energie, keine Ultraschallbearbeitung, kann der Werkzeughalter trotzdem eingesetzt werden, da das Induktionselement integral mit dem Einspannabschnitt des Werkzeughalters ausgebildet ist und somit beispielsweise Störkonturen im Bearbeitungsbereich vermieden werden. Solche Störkonturen können resultieren, wenn Induktionselemente auf der Außenseite des Werkzeughalters angebracht werden. Dadurch wird die Einsatzflexibilität und somit auch die Ökonomie des Werkzeughalters gegenüber Werkzeughaltern, die auf eines der beiden Bearbeitungsverfahren festgelegt sind, gesteigert.

In einer besonders vorteilhaften Ausführungsform des Werkzeughalters, ist dessen Einspannabschnitt als Hohlschaftkegel ausgebildet. Dessen Vorteile wurden bereits vorstehend erläutert.

In einer weiteren vorteilhaften Ausführungsform des Werkzeughalters, ist dieser als Steilkegel ausgebildet. Auch diesbezügliche Vorteile wurden bereits erläutert.

Besonders vorteilhaft umfasst der Werkzeughalter zum Zwecke der Übertragung elektrischer Energie vom Induktionselement an den Schwingungswandler zusätzlich Leitungen, die lötfrei mit dem Schwingungswandler verbunden sind. Vorteile der lötfreien Verbindung vom Induktionselement mit dem Schwingungswandler wurden ebenfalls bereits dargelegt.

Weiterhin ist es besonders vorteilhaft, wenn ein Verbindungsabschnitt des Werkzeughalters, der wenigstens den Einspannabschnitt und den Greiferabschnitt umfasst, wenigstens zweiteilig gefertigt ist. Durch die zweiteilige Fertigung kann das Induktionselement besonders vorteilhaft integral mit dem Einspannabschnitt gefertigt werden. So können beispielsweise zwei unterschiedliche Elemente vorgefertigt werden, von denen eines im Wesentlichen den Einspannabschnitt bildet, wobei eine Aussparung vorgesehen ist, in die das Induktionselement eingepasst werden kann. Ein zweiter Abschnitt, der im Wesentlichen den Greiferabschnitt und einen Verbindungsabschnitt zum restlichen Werkzeughalter umfasst, kann so ausgebildet sein, dass er sich passgenau mit dem ersten Teil, das den Einspannabschnitt bildet, zusammenfügt um das Induktionselement in der Aussparung des Einspannabschnittes einzuschließen. Diese beiden passgenau zusammengefügten Teile bilden so den Verbindungsabschnitt des Werkzeughalters und umschließen das Induktionselement. Die Vorfertigung der Einzelteile des Verbindungsabschnittes des Werkzeughalters ermöglicht so ein einfaches Zusammensetzen und Integrieren des Induktionselements. Insbesondere können die beiden Einzelteile verpresst, verklebt, verschweißt oder anderweitig zerstörungsfrei lösbar oder unlösbar miteinander verbunden werden, wobei sie stets das Induktionselement des Werkzeughalters umschließen.

Weiterhin können in einem oder beiden der Einzelteile, die den Verbindungsabschnitt des Werkzeughalters bilden, Durchführungen wie beispielsweise Bohrungen vorgesehen sein, die es ermöglichen Leitungen einzusetzen um das Induktionselement beispielsweise mit dem Schwingungswandler des Werkzeughalters zu verbinden.

In einer alternativen vorteilhaften Ausführungsform hat der Werkzeughalter im Einspannabschnitt eine umlaufende Nut angeordnet, in die das Induktionselement wenigstens teilweise eingelassen ist. Diese Ausführungsform reduziert die Fertigungskomplexität weiter, indem der Werkzeughalter einteilig gefertigt werden kann. Dazu wird der Werkzeughalter, wie vorbekannt gefertigt, bevor eine Nut im Einspannabschnitt angeordnet wird. Insbesondere kann diese Nut gefräst oder gedreht werden. Das Induktionselement des Werkzeughalters kann dann wenigstens teilweise in diese Nut eingelassen werden. Insbesondere kann das Induktionselement als Spule ausgeführt sein, die direkt in diese Nut im Einspannbereich des Werkzeughalters gewickelt wird. Alternativ kann zuvor ein Ferritelement, beispielsweise ein Ferritelement, das einen U-förmigen Querschnitt aufweist, in die Nut eingesetzt werden, bevor die Spule in das, in der Nut angeordnete Ferritelement gewickelt wird.

Vorteilhaft wird das Induktionselement so im Einspannbereich des Werkzeughalters vorgesehen, beziehungsweise, der Einspannbereich wird so ausgebildet, dass ein Außendurchmesser des Einspannbereichs des Werkzeughalters in dem Bereich, in dem das Induktionselement angeordnet ist, gleich einem Außendurchmesser des Einspannbereichs des Werkzeughalters in dem Bereich ist, in dem das Induktionselement nicht angeordnet ist.

Wird beispielsweise der Verbindungsbereich des Werkzeughalters zweiteilig ausgeführt, kann das Teil, welches den Einspannbereich des Werkzeughalters bildet mit einem konstanten Außendurchmesser gefertigt werden. Insbesondere ändert sich der Außendurchmesser in dem Bereich, der die Aussparung angeordnet hat, in die das Induktionselement aufgenommen wird, nicht. Dadurch kann das Induktionselement integral mit dem Einspannbereich des Werkzeughalters ausgebildet werden, ohne dass der Außendurchmesser des Einspannbereichs eine Veränderung aufweist.

Ist der Außendurchmesser zusätzlich gemäß einer entsprechenden Norm gefertigt, resultiert das in einem normgerechten Einspannbereich, der sich lediglich dadurch unterscheidet, dass der entsprechende Werkzeughalter aufgrund des integrierten Induktionselements zusätzlich eingerichtet ist, eine Ultraschallbearbeitung von Werkstücken zu ermöglichen. Diese Eignung zur Ultraschallbearbeitung ist jedoch für Automatisierungsvorrichtungen, wie automatische Werkzeugwechsler und/oder Werkzeugmagazine oder dergleichen transparent, das heißt weder müssen besondere Vorkehrungen getroffen werden um einen derartigen Werkzeughalter mit einer solchen Vorrichtung automatisiert zu wechseln und/oder einzulagern, noch erfordert eine Maschine, die für die Ultraschallbearbeitung eingesetzt werden soll gesonderte Automatisierungsanlagen, falls derart gefertigte Werkzeughalter verwendet werden.

In gleicher Weise kann vorteilhaft auch ein Werkzeughalter mit einer Nut im Einspannabschnitt frei von einer Änderung des Außendurchmessers im Einspannbereich sein, wenn das Induktionselement des Werkzeughalters derart in der Nut versenkt beziehungsweise in die Nut eingelassen oder gewickelt wird, dass es sich gerade bis zum Außendurchmesser des Einspannabschnitts erstreckt. Insbesondere ist das Induktionselement so ausgebildet, dass es die Nut komplett ausfüllt, ohne sich über diese hinaus zu erstrecken.

Weiterhin kann der Einspannabschnitt mit einem integral mit diesem ausgebildeten Induktionselement derart vorteilhaft ausgebildet sein, dass eine relative Änderung eines Außendurchmessers des Einspannbereichs in axialer Richtung des Werkzeughalters in dem Bereich, in dem das Induktionselement angeordnet ist, gleich einer relativen Änderung des Außendurchmessers des Einspannbereichs in axialer Richtung des Werkzeughalters in dem Bereich ist, in dem das Induktionselement nicht angeordnet ist. Insbesondere wird die relative Änderung des Außendurchmessers jeweils in der gleichen axialen Richtung des Werkzeughalters ermittelt.

Beispielsweise nimmt ein Außendurchmesser des Einspannabschnittes von einem Einspannende des Werkzeughalters bis zum Greiferabschnitt des Werkzeughalters stetig zu. Dies kann der Fall sein, wenn der Einspannabschnitt als HSK oder als Steilkegel ausgeführt ist. In diesem Fall ändert sich der Außendurchmesser des Einspannabschnittes gemäß der jeweiligen Kegeldefinition oder -norm. Insbesondere unterscheidet sich der Bereich, in dem das Induktionselement integral mit dem Einspannabschnitt ausgebildet ist hinsichtlich einer Änderung des Außendurchmessers nicht von den umliegenden Bereichen des Einspannabschnitts.

Besonders vorteilhaft ist der Einspannabschnitt auf eine Weise integral mit dem Induktionselement ausgebildet, dass der Einspannabschnitt alle Voraussetzungen einer Norm, beispielsweise einer HSK-Norm oder einer Steilkegelnorm, hinsichtlich der Abmessungen und insbesondere hinsichtlich Änderungen des Außendurchmessers erfüllt. Relevante diesbezügliche Normen sind u.a. die ISO 12164 (DIN 69893-1) und die ISO 7388-1.

Diese vorteilhafte Ausführungsform steigert die Einsatzflexibilität, da ein derartig ausgeführter Werkzeughalter in allen Werkzeugmaschinen eingesetzt werden kann, die mit einer normgerechten Schnittstelle ausgestattet sind.

Gemäß einem weiteren Aspekt der Erfindung wird eine Spindelvorrichtung zum Einsatz in einem Spindelsystem bereitgestellt. Die Spindelvorrichtung umfasst wenigstens eine rotatorisch angetriebene Arbeitsspindel mit einem Aufnahmeabschnitt für einen Werkzeughalter, ein Spindelgehäuse, in dem die Arbeitsspindel gelagert ist und ein Induktionselement, das am Spindelgehäuse angeordnet ist, wobei das Induktionselement eingerichtet ist, bei mit der Arbeitsspindel verbundenem Werkzeughalter kontaktlos elektrische Energie an ein Induktionselement des Werkzeughalters zu übertragen.

Dabei ist das Induktionselement, welches am Spindelgehäuse angeordnet ist vorteilhaft so angeordnet, dass es einem integral mit dem Einspannabschnitt eines Werkzeughalters gefertigten Induktionselement radial gegenüberliegt, wenn dieser Werkzeughalter mit der umfassten Arbeitsspindel verbunden ist.

In einer besonders vorteilhaften Ausführungsform ist das Induktionselement, welches am Spindelgehäuse angeordnet ist, ringförmig ausgeführt und derart senkrecht zur Haupterstreckungsrichtung der Arbeitsspindel ausgerichtet, dass die Arbeitsspindel sich durch eine Mitte des ringförmig ausgeführten Induktionselements erstreckt. Insbesondere erstreckt sich das Induktionselement vorteilhaft über 360 ° eines radialen Umfangs der Arbeitsspindel. Diese vorteilhafte Ausführungsform steigert die Übertragungseffizienz gegenüber Induktionsmodulen, die sich lediglich über einen Teilumfang (beispielsweise lediglich über 90 ° oder 120 °) erstrecken erheblich.

Besonders vorteilhaft ist das am Spindelgehäuse angeordnete Induktionselement eingerichtet senkrecht zur Haupterstreckungsrichtung der Arbeitsspindel verschiebbar befestigt zu werden. Dadurch wird die Einsatzflexibilität weiter gesteigert, da auf diese Weise Induktionselemente von Werkzeughalter induktiv gekoppelt werden können, selbst falls diese jeweils an unterschiedlichen Positionen angeordnet sind. Dies kann beispielsweise die Folge sich unterscheidender Dimensionierungen von Einspannbereichen von unterschiedlichen Werkzeughaltern sein. So könnte ein Werkzeughalter einen verhältnismäßig langen Einspannabschnitt aufweisen, wodurch ein integral mit diesem Einspannabschnitt ausgebildetes Induktionselement in Relation zur Arbeitsspindel tiefer sitzen könnte. Diesfalls könnte das Induktionselement am Spindelgehäuse in Richtung des Aufnahmeabschnitts nach unten verschoben werden um eine radial gegenüberliegende Ausrichtung mit dem Induktionselement des Werkzeughalters mit dem verhältnismäßig langen Einspannabschnitt zu erzielen. Würde dagegen ein Werkzeughalter mit einem verhältnismäßig kurzen Einspannabschnitt eingesetzt, könnte das Induktionselement am Spindelgehäuse in entgegengesetzter Richtung verschoben werden um eine radial gegenüberliegende Ausrichtung des in Relation zur Arbeitsspindel höher sitzenden Induktionselements zu ermöglichen.

Gemäß einem weiteren Aspekt der Erfindung wird eine Werkzeugmaschine bereitgestellt, die eines der bereits beschriebenen Spindelsysteme umfasst und die zur Ultraschallbearbeitung eines Werkstückes eingerichtet ist. Eine derartige Werkzeugmaschine kann dank des umfassten Spindelsystems besonders effizient und effektiv eingesetzt werden um eine Ultraschallbearbeitung zu erreichen. Insbesondere kann sie in hoch automatisierten Umgebungen zum Einsatz kommen, da sie nahtlos mit Automatisierungsvorrichtungen wie Werkzeugwechslern und/oder -magazinen kombiniert werden kann. Ein besonderer Vorteil ist, dass trotz der Möglichkeit der Ultraschallbearbeitung keine Änderungen an den Automatisierungsvorrichtungen vorgenommen werden müssen. Dies wird unter anderem durch die Werkzeughalter, welche durch ihren Werkzeugaufnahmeabschnitt und das integral mit dem Einspannabschnitt ausgebildete Induktionselement zur Ultraschallbearbeitung eingerichtet sind, ermöglicht. Diese können auf die gleiche Weise wie konventionelle Werkzeughalter eingespannt und von Automatisierungsvorrichtungen gegriffen, verfahren, positioniert ein- oder ausgelagert und/oder sonstig gehandhabt werden. Dieser hohe erreichbare Automationsgrad wirkt sich insbesondere positiv auf Stillstandzeiten aus, sodass die vorgestellte Maschine sehr wirtschaftlich betrieben werden kann.

In einer besonders vorteilhaften Ausführung ist in den Werkzeugaufnahmeabschnitt des Werkzeughalters des Spindelsystems der Werkzeugmaschine zur Ultraschallbearbeitung ein Fräs-, Schleif-, oder Bohrwerkzeug aufgenommen. Auf diese Weise kann die Maschine je nach aufgenommenem Werkzeug zur jeweiligen Bearbeitung, also zum Fräsen, Schleifen oder Bohren eingesetzt werden, wobei das jeweilige Werkzeug durch den Schwingungswandler in Schwingung versetzt werden kann um eine Ultraschallbearbeitung einer Werkstückoberfläche zu erreichen. Dadurch wird die Flexibilität der Werkzeugmaschine weiter gesteigert.

Gemäß einer weiteren vorteilhaften Ausführungsform ist in den Werkzeugaufnahmeabschnitt des Werkzeughalters des Spindelsystems der Werkzeugmaschine zur Ultraschallbearbeitung ein Werkzeug mit geometrisch bestimmter oder geometrisch unbestimmter Schneide aufgenommen. Diese Ausführungsform erlaubt eine weitere Anpassung von Bearbeitungsschritten an ein erwünschtes Bearbeitungsszenario.

### Kurzbeschreibung der Figuren

Fig. 1 zeigt einen Querschnitt eines Spindelsystems 100 mit aufgenommenem Werkzeughalter 400.
Fig. 2a zeigt einen Spulenanordnung in radialer Richtung.
Fig. 2b zeigt eine Spulenanordnung in axialer Richtung.
Fig. 3 zeigt einen Querschnitt eine Werkzeugaufnahmevorrichtung des Werkzeughalters 300 mit einem Werkzeugaufnahmeabschnitt 404 und einem gekoppeltem Schwingungswandler 405.
Fig. 4a zeigt eine Explosionsansicht eines Werkzeughalters 400.
Fig. 4b zeigt den zusammengesetzten Werkzeughalter 400 aus Fig. 4a.

### Ausführliche Figurenbeschreibung

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

Es sei hervorgehoben, dass die vorliegende Erfindung jedoch in keiner Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

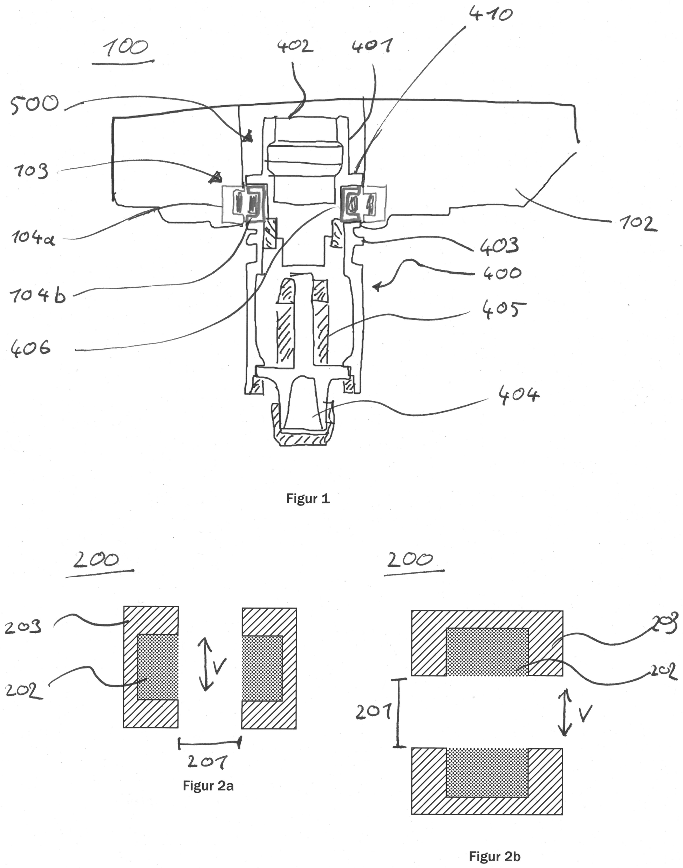

Figur 1 zeigt eine Querschnittansicht einer vorteilhaften Ausführung des Spindelsystems 100 mit aufgenommenem Werkzeughalter 400. Die Energieübertragungsvorrichtung 103 ist als Paar von ringförmigen spulenbasierten Induktionselementen 104a, 104b ausgeführt, die einander radial gegenüberliegend angeordnet sind. Vorteilhaft ist dabei die statische Spule 104a im Spindelgehäuse 102 angeordnet. Die Anordnung der mit dem Werkzeughalter 400 mitrotierenden Spule 104b im Einspannabschnitt 401 ist vorteilhaft so gewählt, dass bei mit der Arbeitsspindel (nicht gezeigt) verbundenem Werkzeughalter 400 die vorteilhafte radiale Ausrichtung zustande kommt. Die Vorteile dieser radialen Ausrichtung werden anhand von den Figuren 2a und 2b erläutert.

Weiterhin ist in Figur 1 dargestellt, dass das Induktionselement des Werkzeughalters 104b, in einer den Werkzeughalter umlaufenden Nut 406 versenkt ist. Dies ist aufgrund mehrerer Aspekte vorteilhaft.

Erstens kann das Induktionselement des Werkzeughalters 104b auf diese Weise sehr gut an den Außendurchmesser des Werkzeughalters 400 angepasst werden. Das erlaubt es den Abstand zwischen den beiden Induktionselementen (siehe 201 in Figur 2a) klein zu halten, was eine hohe Übertragungseffizienz von elektrischer Energie zwischen den Induktionselementen ermöglicht.

Zweitens kann ein Durchmesser des als Spule ausgeführten Induktionselements 104b im Vergleich zu Elementen, die ohne Nut an einer Außenseite des Werkzeughalters 400 befestigt werden, klein gehalten werden. Dadurch werden Fliehkräfte, die bei einer Drehung des Werkzeughalters auf das Induktionselement 104b wirken, klein gehalten. In der Folge kann ein Werkzeughalter 400, der ein Induktionselement 104b in einer Nut 406 eingesetzt oder versenkt hat mit höheren Drehzahlen gedreht werden, wodurch eine Oberflächenqualität von Werkstücken, die mit einem Werkzeug bearbeitet werden, was in einem derartigen Werkzeughalter 400 eingesetzt ist, verbessert wird.

Es ist in der Schnittansicht in Figur 1 insbesondere ersichtlich, dass ein Greiferabschnitt 403 des Werkzeughalters 400 freiliegt und nicht beispielsweise vom Spindelgehäuse 102 über- oder verdeckt wird. Weiterhin hat der Greiferabschnitt des Werkzeughalters 403 in der in Figur 1 dargestellten Ausführungsform mehrere Eingriffsnuten angeordnet. Dadurch kann die Kompatibilität mit einer Vielzahl unterschiedlicher Automatisierungsvorrichtungen erreicht werden. Eine Automatisierungsvorrichtung wie ein Greifer, ein Werkzeugwechsler oder dergleichen können aus einer beliebigen Richtung von unterhalb des Spindelgehäuses 102 in den Greiferabschnitt 403 eingreifen. Insbesondere ist ein derartiger Eingriff entweder aus axialer Richtung von unterhalb des Werkzeugaufnahmeabschnittes 404 oder auch aus radialer Richtung möglich.

Die Integrale Ausbildung von Induktionselement 104b und Einspannabschnitt des Werkzeughalters 401 erlaubt folglich eine besonders günstige Anordnung des ersten Induktionselements 104a, sodass eine effiziente Energieübertragung stattfinden kann, ohne das Automatisierungspotenzial beispielsweise hinsichtlich des Werkzeugwechsels zu reduzieren.

Figur 2a zeigt einen Querschnitt einer Spulenanordnung 200 von zwei Spulen 202, wobei beide Spulen 202 jeweils in ein Element 203 eingefasst sind. Bei diesem Element 203 kann es sich beispielsweise um eine Nut 406 im Einspannbereich eines Werkzeughalters 400 handeln. In einer alternativen Ausführungsform handelt es sich bei dem Element 203 um eine (Teil-)Ummantelung aus einem ferritischen Material. In einer derartigen Ausführungsform würde ein Induktionselement 104a, 104b folglich die (Teil-)Ummantelung aus dem ferritischen Material und die darin gewickelten Spule umfassen. Die Anordnungen der Induktionselemente, wie sie in dieser Beschreibung dargelegt sind, sind als unabhängig von den konkreten Zusammensetzungen der entsprechenden Induktionselemente zu verstehen.

Insbesondere ist in Figur 2a eine radiale Spulenanordnung gezeigt, wie sie auch in der Ausführungsform von Figur 1 realisiert wurde. Aus Gründen der Übersicht sind beide Spulen identisch dargestellt. Es sei angemerkt, dass die Vorteile der radialen Spulenanordnung sich auch bei unterschiedlich ausgeführten Spulen ergeben.

Relevant für die Übertragungseffizienz elektrischer Energie von einer Spule zur anderen, ist besonders der Abstand 201 zwischen den Spulen. Hier wird auch der Vorteil einer radialen Anordnung ersichtlich, da der Abstand 201, wie auch aus Figur 1 zu erkennen ist, nicht von einer axialen Position der Spulen abhängt, sondern unter anderem von den Durchmessern der ringförmigen Spulenelemente 104a, 104b. Findet also beispielsweise aufgrund von Fertigungstoleranzen des Werkzeughalters 400, eine axiale Fehlausrichtung, also eine Verschiebung der Spulen zueinander in Richtung V, statt, ändert sich der Abstand 201 bei radialer Ausrichtung nicht. Die Übertragungseffizienz wird in der Folge nur wenig beeinflusst.

Es ist zu erkennen, dass eine derartige Fehlausrichtung bei der axialen Ausrichtung der Spulen 202 zueinander, wie sie aus dem Stand der Technik bekannt ist und wie sie in Figur 2b dargestellt ist, direkten Einfluss auf den Abstand 201 der Spulen zueinander hat. Wäre ein Werkzeughalter 400, also beispielsweise zu tief an der Spindel befestigt, wäre ein Abstand der Spulen 201 zueinander vergrößert, was einen direkten negativen Einfluss auf die Übertragungseffizienz elektrischer Energie zwischen den Spulen 202 hätte.

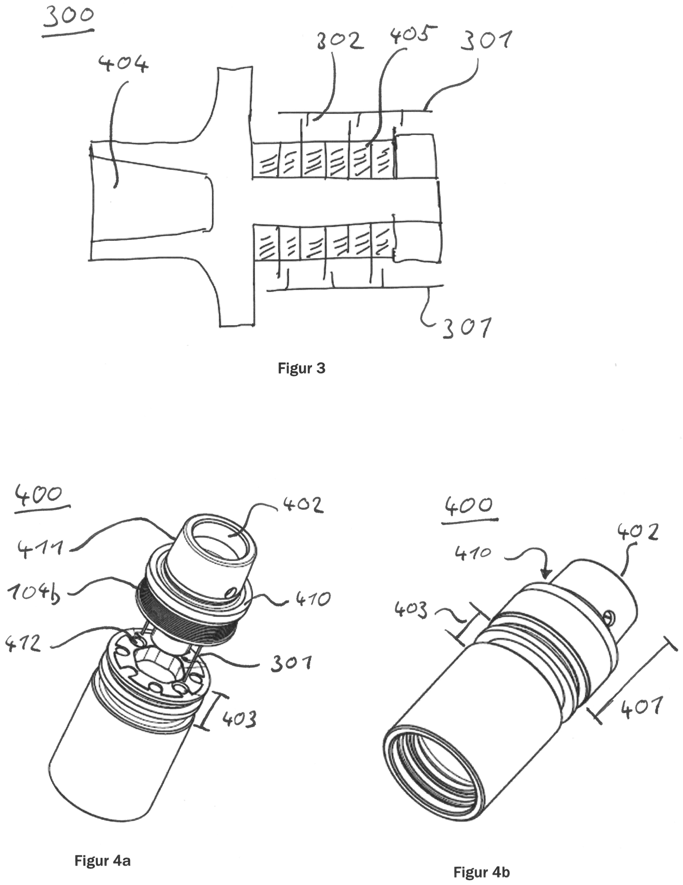

Figur 3 zeigt einen Querschnitt einer vorteilhaften Ausführung einer Werkzeugaufnahmevorrichtung 300 des Werkzeughalters 400. In der gezeigten Ausführung ist der Schwingungswandler 405 des Werkzeughalters 400 als Stapel von Piezoelementen ausgeführt. Besonders vorteilhaft sind Leitungen 301 an der Werkzeugaufnahmevorrichtung 300 vorgesehen, die mit dem Schwingungswandler lötfrei verbunden sind. Insbesondere wird eine Verbindung der Leitungen, die elektrische Energie vom Induktionselement 104b an den Schwingungswandler 405 weiterleiten, mit dem Schwingungswandler 405 über einen Formschluss 302 hergestellt. Die Vorteile einer solchen Ausführungsform wurden bereits vorstehend beschrieben.

Figur 4a zeigt eine Explosionszeichnung einer vorteilhaften Ausführungsform des Werkzeughalters 400, wobei ein Verbindungsabschnitt des Werkzeughalters, der den Einspannabschnitt 401 und den Greiferabschnitt 403 umfasst zweiteilig ausgeführt ist. Diese Ausführungsform erlaubt eine besonders effiziente Herstellung des Werkzeughalters, da die Teile mit den beiden Abschnitten 401, 403 unabhängig voneinander gefertigt werden können, bevor sie zum Verbindungsabschnitt des Werkzeughalters 400 zusammengesetzt werden. Um ein Zusammensetzen und Integrieren des Induktionselements 104b zu erleichtern, können beispielsweise Bohrungen 412 vorgesehen sein, durch die die Leitungen 301 geführt werden können, welche das Induktionselement 104b mit dem Schwingungswandler 405 verbinden.

Diese Ausführungsform ist zusätzlich vorteilhaft mit einem Hohlschaftkegel 411 als Einspannabschnitt 401 ausgeführt. Besonders vorteilhaft ist bei dieser Ausführungsform die Plananlagefläche 410, die in einem Zustand in dem der Werkzeughalter 400 mit einer Arbeitsspindel verbunden ist, einen Großteil der Spannkräfte aufnimmt und so die Grenzbelastung und Steifigkeit der Kegel-Hohlschaft-Verbindung verbessert.

In Figur 4b ist der zusammengesetzte Werkzeughalter 400 aus Figur 4a dargestellt.

Vorstehend wurden Beispiele bzw. Ausführungsbeispiele der vorliegenden Erfindung sowie deren Vorteile detailliert unter Bezugnahme auf die beigefügten Figuren beschrieben.

Es sei erneut hervorgehoben, dass die vorliegende Erfindung jedoch in keiner Weise auf die vorstehend beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

### Liste der Bezugszeichen

- 100: Spindelsystem
- 102: Spindelgehäuse
- 103: Energieübertragungsvorrichtung
- 104a: (statisches) Induktionselement
- 104b: (rotierendes) Induktionselement
- 200: Spulenanordnung
- 201: Spulenabstand
- 202: Spule
- 203: Spule umgebendes Element
- 300: Werkzeugaufnahmevorrichtung
- 301: Leitung
- 302: Verbindung mittels Formschluss
- 400: Werkzeughalter
- 401: Einspannabschnitt
- 402: Einspannende des Werkzeughalters
- 403: Greiferabschnitt
- 404: Werkzeugaufnahmeabschnitt
- 405: Schwingungswandler
- 406: Nut im Einspannabschnitt
- 410: Plananlagefläche
- 411: Hohlschaftkegel
- 412: Bohrung für Leitungsdurchführung
- 500: Spindelvorrichtung

## Patentansprüche

1. Spindelsystem (100) zum Einsatz an einer Werkzeugmaschine, das wenigstens umfasst:
- eine Spindelvorrichtung (500), die eine rotatorisch angetriebene Arbeitsspindel mit einem Aufnahmeabschnitt zur lösbaren Verbindung eines Werkzeughalters (400) und ein Spindelgehäuse (102) umfasst, in dem die Arbeitsspindel gelagert ist;
- ein Werkzeughalter (400), der wenigstens umfasst:
∘ einen Einspannabschnitt (401) zur lösbaren Verbindung mit einer Arbeitsspindel einer Spindelvorrichtung (100),
∘ einen relativ zu einem Einspannende des Werkzeughalters (402) unterhalb des Einspannabschnittes (401) angeordneten Greiferabschnitt (403),
∘ einen Werkzeugaufnahmeabschnitt (404), und
∘ einen mit dem Werkzeugaufnahmeabschnitt (404) gekoppelten Schwingungswandler (405), der eingerichtet ist, ein im Werkzeugaufnahmeabschnitt (404) aufgenommenes Bearbeitungswerkzeug in Schwingung zu versetzen; und
- eine Energieübertragungsvorrichtung (103), die ein erstes Induktionselement (104a) und ein zweites Induktionselement (104b) umfasst;
wobei das erste Induktionselement (104a) am Spindelgehäuse (102) angeordnet ist und das zweite Induktionselement (104b) am Werkzeughalter (400) im Einspannabschnitt (401) angeordnet ist und die Energieübertragungsvorrichtung (103) bei mit der Arbeitsspindel verbundenem Werkzeughalter (400) eingerichtet ist, zur Energieversorgung des Schwingungswandlers (405) kontaktlos Energie zwischen dem ersten Induktionselement (104a) und dem diesen radial gegenüberliegenden zweiten Induktionselement (104b) zu übertragen;
**dadurch gekennzeichnet, dass**
das zweite Induktionselement (104b) integral mit dem Einspannabschnitt des Werkzeughalters (401) ausgebildet ist, dergestalt, dass eine automatisierte Wechselvorrichtung in den Greiferabschnitt des Werkzeughalters (403) eingreifen kann.

2. Spindelsystem (100) nach Anspruch 1, wobei der Einspannabschnitt des Werkzeughalters (401) als Hohlschaftkegel (411) ausgebildet ist.

3. Spindelsystem (100) nach Anspruch 1, wobei der Einspannabschnitt des Werkzeughalters (401) als Steilkegel ausgebildet ist.

4. Spindelsystem (100) nach einem der vorstehenden Ansprüche, wobei der Werkzeughalter (400) zum Zwecke der Übertragung elektrischer Energie vom Induktionselement des Werkzeughalters (104b) an den Schwingungswandler (405) zusätzlich Leitungen (301) umfasst, die lötfrei mit dem Schwingungswandler (405) verbunden sind.

5. Werkzeughalter (400) für ein Spindelsystem (100) nach einem der vorstehenden Ansprüche, wenigstens umfassend
- einen Einspannabschnitt (401) zur lösbaren Verbindung mit einer Arbeitsspindel einer Spindelvorrichtung (500),
- einen relativ zu einem Einspannende des Werkzeughalters (402) unterhalb des Einspannabschnittes (401) angeordneten Greiferabschnitt (403),
- einen Werkzeugaufnahmeabschnitt (404), und
- einen mit dem Werkzeugaufnahmeabschnitt (404) gekoppelten Schwingungswandler (405), der eingerichtet ist, ein im Werkzeugaufnahmeabschnitt (404) aufgenommenes Bearbeitungswerkzeug in Schwingung zu versetzen,
wobei der Werkzeughalter (400) im Einspannabschnitt (401) ein Induktionselement (104b) angeordnet hat, das bei einer Verbindung des Werkzeughalters (400) mit einer Arbeitsspindel eingerichtet ist, kontaktlos elektrische Energie zu empfangen und an den Schwingungswandler (405) weiterzuleiten, und
wobei das Induktionselement derart integral mit dem Einspannabschnitt des Werkzeughalters (401) ausgebildet ist, dass eine automatisierte Wechselvorrichtung in den Greiferabschnitt des Werkzeughalters (403) eingreifen kann.

6. Werkzeughalter (400) nach Anspruch 5, wobei der Einspannabschnitt (401) als Hohlschaftkegel (411) ausgebildet ist.

7. Werkzeughalter (400) nach Anspruch 5, wobei der Einspannabschnitt (401) als Steilkegel ausgebildet ist.

8. Werkzeughalter (400) nach einem der Ansprüche 5 bis 7, wobei der Werkzeughalter (400) zum Zwecke der Übertragung elektrischer Energie vom Induktionselement (104b) an den Schwingungswandler (405) zusätzlich Leitungen (301) umfasst, die lötfrei mit dem Schwingungswandler (405) verbunden sind.

9. Werkzeughalter (400) nach einem der Ansprüche 5 bis 8, wobei ein Verbindungsabschnitt des Werkzeughalters, der wenigstens den Einspannabschnitt (401) und den Greiferabschnitt (403) umfasst, wenigstens zweiteilig gefertigt ist.

10. Werkzeughalter (400) nach einem der Ansprüche 5 bis 9, wobei das Induktionselement des Werkzeughalters (104b) wenigstens teilweise in eine den Werkzeughalter umlaufende Nut (406) eingelassen ist, die im Einspannabschnitt des Werkzeughalters (401) angeordnet ist.

11. Werkzeughalter (400) nach einem der Ansprüche 5 bis 10, wobei ein Außendurchmesser des Einspannabschnittes des Werkzeughalters (401) in einem Bereich, in dem das Induktionselement (104b) angeordnet ist, gleich einem, oder kleiner als ein Außendurchmesser des Einspannabschnittes des Werkzeughalters (401) in einem Bereich ist, in dem das Induktionselement (104b) nicht angeordnet ist.

12. Werkzeughalter nach einem der Ansprüche 5 bis 10, wobei eine relative Änderung eines Außendurchmessers des Einspannabschnittes (401) in axialer Richtung des Werkzeughalters (400) in einem Bereich, in dem das Induktionselement (104b) angeordnet ist, gleich einer relativen Änderung des Außendurchmessers des Einspannabschnittes (401) in axialer Richtung des Werkzeughalters (400) in einem Bereich ist, in dem das Induktionselement (104b) nicht angeordnet ist.

13. Spindelvorrichtung (500) für ein Spindelsystem (100) nach einem der Ansprüche 1 bis 4, die zumindest umfasst
- eine rotatorisch angetriebene Arbeitsspindel mit einem Aufnahmeabschnitt für einen Werkzeughalter (400) und
- ein Spindelgehäuse (102), in dem die Arbeitsspindel gelagert ist;
- ein Induktionselement (104a), das am Spindelgehäuse (102) angeordnet ist, wobei
das Induktionselement (104a) eingerichtet ist, bei mit der Arbeitsspindel verbundenem Werkzeughalter (400) kontaktlos elektrische Energie an ein Induktionselement des Werkzeughalters (104b) zu übertragen.

14. Werkzeugmaschine umfassend ein Spindelsystem (100) nach einem der Ansprüche 1 bis 4, die zur Ultraschallbearbeitung von Werkstücken eingerichtet ist.

15. Werkzeugmaschine nach Anspruch 14, wobei zur Ultraschallbearbeitung ein Fräs-, Schleif- oder Bohrwerkzeug oder ein Werkzeug mit geometrisch bestimmter oder geometrisch unbestimmter Schneide in den Werkzeugaufnahmeabschnitt des Werkzeughalters (404) des Spindelsystems (100) aufgenommen ist.
